(19) Europäisches Patentamt
European Patent Office
Office européen des brevets

(11) **EP 4 005 825 B1**

(12) **EUROPEAN PATENT SPECIFICATION**

(45) Date of publication and mention
of the grant of the patent:
**03.09.2025 Bulletin 2025/36**

(21) Application number: **20843395.3**

(22) Date of filing: **22.07.2020**

(51) International Patent Classification (IPC):
**B60C 13/00** *(2006.01)*     **B60C 15/00** *(2006.01)*
**B60C 1/00** *(2006.01)*      **B60C 19/00** *(2006.01)*
**B60C 11/00** *(2006.01)*

(52) Cooperative Patent Classification (CPC):
**B60C 13/00; B60C 1/0016; B60C 3/04;**
**B60C 15/00; B60C 19/00;** B60C 2011/0025;
B60C 2013/007; Y02T 10/70

(86) International application number:
**PCT/JP2020/028509**

(87) International publication number:
**WO 2021/015255 (28.01.2021 Gazette 2021/04)**

(54) **TIRE WHEEL ASSEMBLY AND TIRE**

REIFEN-/RADANORDNUNG UND REIFEN

ENSEMBLE PNEUMATIQUE-ROUE ET PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.07.2019 JP 2019137250**

(43) Date of publication of application:
**01.06.2022 Bulletin 2022/22**

(73) Proprietor: **BRIDGESTONE CORPORATION
Chuo-ku
Tokyo 104-8340 (JP)**

(72) Inventor: **KUWAYAMA, Isao
Tokyo 104-8340 (JP)**

(74) Representative: **Marks & Clerk LLP
15 Fetter Lane
London EC4A 1BW (GB)**

(56) References cited:
JP-A- 2004 242 380    JP-A- 2009 018 716
JP-A- 2009 106 136    JP-A- 2010 041 824
JP-A- 2016 074 408    JP-A- 2018 167 831
JP-A- 2019 047 691    JP-A- H08 126 106

**Description**

TECHNICAL FIELD

The invention relates to a tire-wheel assembly and a tire.

BACKGROUND

Tires capable of receiving a supply of electric power are known. For example, Patent Literature (PTL) 1 discloses a tire capable of receiving a supply of electric power from a vehicle body of a vehicle by using a primary coil provided in the vehicle body and a secondary coil disposed in the tire.

JPH08126106 discloses a secondary inductor, which faces a primary-side inductor on the ground, made so that a secondary coil is wound around an iron core arranged on the concentric circle with a wheel of a vehicle, and arranged in the wheel. In this constitution, even if the secondary inductor is brought close to the primary inductor as much as possible, the contact of the secondary inductor with the road surface does not occur. The distance between a primary coil and the secondary coil is shortened, and the power feeding efficiency can be enhanced.

JP2009106136 discloses an electric vehicle which has a secondary self-resonant coil, a second coil, a rectifier, and an electric storage device. The secondary self-resonant coil is combined with a primary self-resonant coil of a power feeding device magnetically by resonance of a magnetic field and is capable of receiving a high frequency power from the first self-resonant coil. The secondary coil is capable of receiving power from the secondary self-resonant coil by electromagnetic induction. The rectifier rectifies the power received by the secondary coil. The electric storage device stores the power rectified by the rectifier.

JP2016074408A discloses that when a rim is incorporated in a tire and internal pressure is 250 kPa or larger, a ratio SW/OD of a sectional width SW of the tire to an external diameter OD (mm) satisfies 0.26 or less for a sectional width SW of 165 (mm) or less, and $2.135 \times SW+282.3 \leq OD$ for a sectional width SW of 165 (mm) or larger. Tread rubber has a dynamic storage elastic modulus E' of 6.0-12.0 MPa and a loss tangent $\tan\delta$ of 0.05-0.15. A plurality of sipe are arranged at at least one land part to a predetermined pitch length L, and $0.6\,W \leq Ws \leq 1.2\,W$ and $L \leq Ls \leq 3\,L$ hold for a land width W, a tire width-directional sipe component total length Ws of sipes within a range of one pitch length L, a pitch length L, and a tire periphery-directional sipe component total length Ls of sipes within the range of one pitch length

JP2018167831A discloses in an automobile pneumatic radial tire, relationship between a tire cross sectional width and a tire outer diameter is optimized. A method of using the automobile pneumatic radial tire includes using the automobile pneumatic radial tire at not less than certain internal pressure.

CITATION LIST

Patent Literature

PTL 1: JP 2000-255229 A

SUMMARY

(Technical Problem)

In the invention disclosed in PTL 1, electric power is supplied from the vehicle body to the tire. For example, in a vehicle such as an electric vehicle that uses electricity as an energy source, if a tire can be supplied with electric power from, for example, a road surface, i.e., from outside a tread portion of the tire in a radial direction, convenience of power supply for the electric vehicle is enhanced.

However, because the power supply from outside the tread portion of the tire in the radial direction is wireless power supply, it is an issue to improve power receiving efficiency.

It would be helpful to provide a tire-wheel assembly and a tire that can improve power receiving efficiency in wireless power supply from outside a tread portion of the tire in a radial direction.

(Solution to Problem)

According to a first aspect of the invention there is provided a tire-wheel assembly as specified in claim 1.

The "tire maximum width portion" refers to a maximum width position in cross section in a tire width direction when the tire is mounted on a rim and under no load.

The "gauge Ts" is the sum of the thicknesses of all members, including a rubber, reinforcement member, inner liner, and the like.

According to a second aspect of the invention there is provided a tire as specified in claim 5.

(Advantageous Effect)

According to the invention, a tire-wheel assembly and a tire that can improve power receiving efficiency in wireless power supply from outside a tread portion of the tire in a radial direction can be provided.

BRIEF DESCRIPTION OF THE DRAWINGS

In the accompanying drawings:

FIG. 1 is a schematic cross sectional view that schematically illustrates a tire-wheel assembly according to an embodiment of the invention;

FIG. 2 is a schematic partial cross sectional view of the tire-wheel assembly according to the embodiment of the invention, including a tire and a rim portion;

FIG. 3A is a diagram that schematically illustrates a ground length Lt (mm) and a projected length (mm) of a power receiving coil, when a tire is viewed from its side; and

FIG. 3B is a cross sectional view in a tire width direction that schematically illustrates a ground width Wt (mm) and a projected width Wc (mm) of the power receiving coil.

DETAILED DESCRIPTION

[Tire-Wheel Assembly]

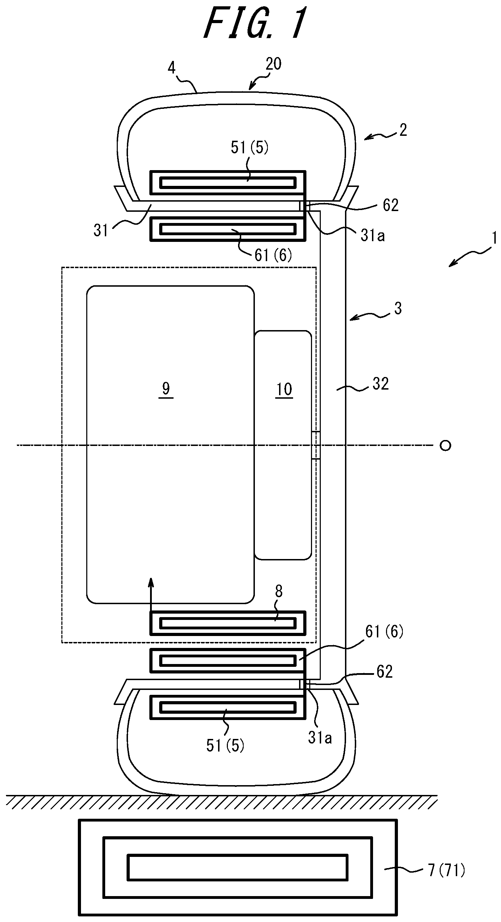

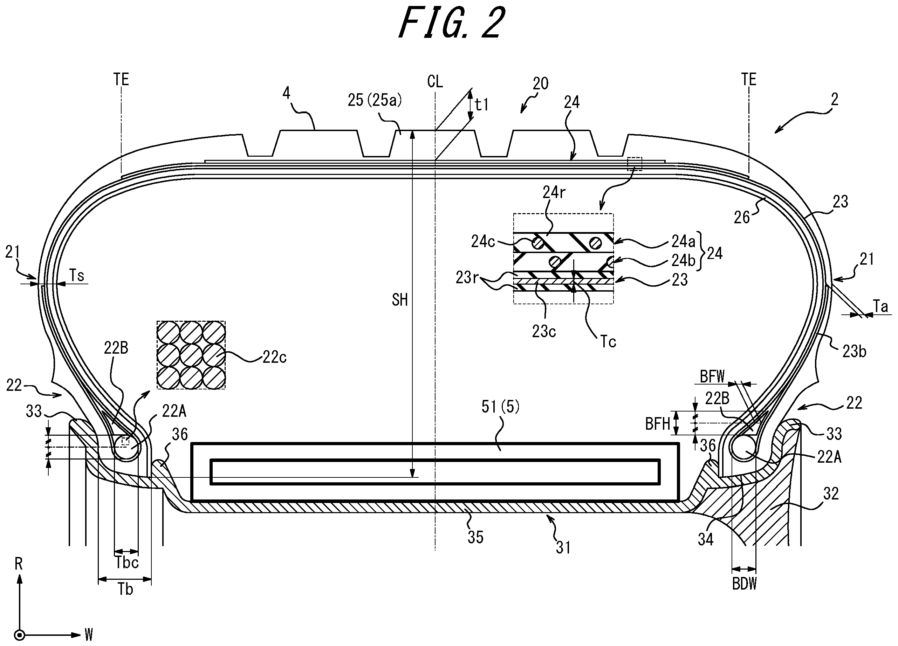

A tire-wheel assembly according to an embodiment of the invention will be described below with reference to FIGS. 1 and 2. In each drawing, common members and components are indicated with the same reference numerals.

FIG. 1 is a schematic cross sectional view of the tire-wheel assembly according to the present embodiment cut along a tire width direction, and FIG. 2 is a schematic partial cross sectional view of the tire-wheel assembly according to the present embodiment, including a tire and a rim portion.

As illustrated in FIG. 1, a tire-wheel assembly 1 according to the present embodiment includes a tire 2 and a wheel 3 on which the tire 2 is mounted.

In this specification, a tire width direction refers to a direction parallel to a rotational axis O of the tire 2. A tire radial direction refers to a direction perpendicular to the rotational axis O of the tire 2. In this specification, a side close to the rotational axis O of the tire 2 along the tire radial direction is referred to as "inside in the tire radial direction", and a side far from the rotational axis O of the tire 2 along the tire radial direction is referred to as "outside in the tire radial direction". On the other hand, a side close to a tire equatorial plane CL along the tire width direction is referred to as "inside in the tire width direction", and a side far from the tire equatorial plane CL along the tire width direction is referred to as "outside in the tire width direction".

As illustrated in FIG. 2, the tire 2 includes a tread portion 20, a pair of sidewall portions 21 extending continuously from the tread portion 20 inside in the tire radial direction, and a pair of bead portions 22 each of which continues inside each of the sidewall portions 21 in the tire radial direction. A power receiving device 5 is disposed inside the tread portion 20 of the tire 2 in the tire radial direction.

The tire 2 has a carcass 23 that extends toroidally between the pair of bead portions 22 and is constituted of one or more carcass plies including a radial array cord, a belt 24 constituted of one or more belt plies provided outside a crown portion of the carcass 23 in the tire radial direction, a tread rubber 25 provided outside the belt 24 in the tire radial direction, and bead cores 22A and bead fillers 22B embedded in the bead portions 22. An outer surface of the tread rubber 25 forms a tread surface 4.

However, in the tire in the present embodiment, the internal structure of the tire is not limited to that illustrated in FIG. 2, and any tire may be used.

The term "tread surface" refers to an outer peripheral surface over the entire circumference of the tire that is to be in contact with a road surface when the tire is mounted on a wheel having an applicable rim and filled with a specified internal pressure and rolled under a maximum load. Furthermore, ends of a ground surface, in the tire width direction, that is in contact with the road surface are referred to as tread ends, and a portion between the tread ends is referred to as the "tread portion".

The "applicable rim" indicates a standard rim (Measuring Rim in ETRTO's STANDARDS MANUAL and Design Rim in TRA's YEAR BOOK) in an applicable size as described in an industrial standard valid for regions where pneumatic tires are produced and used, such as JATMA YEAR BOOK of the JATMA (The Japan Automobile Tyre Manufacturers Association, Inc.) in Japan, STANDARDS MANUAL of the ETRTO (The European Tyre and Rim Technical Organisation) in Europe, YEAR BOOK of TRA (The Tire and Rim Association, Inc.) in the United States, and the like, but in the case of a size not listed in these industrial standards, the "applicable rim" indicates a rim with a width corresponding to a bead width of tires. The term "applicable rim" includes current sizes, as well as sizes that may be to be included in the aforementioned industrial standards in the future. An example of a "future listed size" may be a size listed as "FUTURE DEVELOPMENTS" in the 2013 edition of ETRTO.

The "specified internal pressure" refers to an air pressure (maximum air pressure) corresponding to a maximum load capacity in the applicable size and ply rating described in the aforementioned JATMA YEAR BOOK or other industrial standards. In the case of sizes not listed in the aforementioned industrial standards, the "specified internal pressure" refers to an air pressure (maximum air pressure) corresponding to a maximum load capacity specified for each vehicle on which the tire is mounted. Also, a "maximum load" means a load corresponding to a maximum load capacity in the applicable size tire described in the aforementioned industrial standards, or, in the case of a size not listed in the aforementioned industrial standards, a load corresponding to a maximum load capacity specified for each vehicle on which the tire is mounted.

In the tire-wheel assembly 1 in the present embodiment, the wheel 3 on which the tire 2 is mounted has, as illustrated in FIG. 1, a cylindrical rim portion 31 and a disk portion 32 provided inside the rim portion 31 in the tire radial direction.

In this specification, a wheel width direction refers to a direction parallel to an rotational axis of the wheel 3. A wheel radial direction refers to a direction perpendicular to the rotational axis of the wheel 3. In a state in which the tire 2 is mounted on the wheel 3, the wheel width direction is in parallel with the above-described tire width direction, and the wheel radial direction is in parallel with the above-described tire radial direction.

In this specification, a side close to the rotational axis of the wheel 3 along the wheel radial direction is referred to as "inside in the wheel radial direction", and a side far from the rotational axis of the wheel 3 along the wheel radial direction is referred to as "outside in the wheel radial direction". On the other hand, a side close to the tire equatorial plane CL along the wheel width direction is referred to as "inside in the wheel width direction", and a side far from the tire equatorial plane CL along the wheel width direction is referred to as "outside in the wheel width direction".

The rim portion 31 includes, from outside in the wheel width direction, a pair of flanges 33, a pair of bead seats 34, and a well 35. The bead portions 22 of the tire 2 are mounted on the bead seats 34. The flanges 33 extend from the bead seats 34 outwardly in the wheel radial direction and outwardly in the wheel width direction, to support the bead portions 22 of the tire 2 from its sides. The well 35 is concave between the pair of bead seats 34 to the inside of the wheel in the radial direction to facilitate attachment and detachment of the tire. The well 35 has a bottom portion and inclined surfaces each of which connects between the bottom portion and the bead seat 34. Further, a pair of humps 36 are provided in the bead seats 34 inside in the wheel width direction. The humps 36 protrude outwardly in the wheel radial direction to prevent the beads of the tire from falling into the well 35.

The positions of the power receiving devices 5 in the tire radial direction are not particularly limited as long as the power receiving devices 5 are disposed inside the tread portion 20 of the tire 2 in the tire radial direction. For example, the power receiving devices 5 may be disposed inside or outside the rim portion 31 of the wheel 3 in the wheel radial direction. Further, the power receiving devices 5 may be disposed on a tire inner surface of the tread portion 20 of the tire 2. In the example illustrated in FIG. 1, the power receiving devices 5 are disposed outside the rim portion 31 of the wheel 3 in the wheel radial direction (outside in the tire radial direction).

Electric power is supplied wirelessly to one of the power receiving devices 5 from outside the tread portion 20 in the tire radial direction. For example, in the example illustrated in FIG. 1, a power transmission device 7 is provided on a road or the like, and electricity is supplied wirelessly from the power transmission device 7. Here, the power transmission device 7 may supply electric power to one of the power receiving devices 5 by, for example, an electromagnetic induction method, an electric field coupling method, or the like.

A power transmission coil (primary coil) 71, as the power transmission device 7, is installed on a road surface of the road or the like, or is buried so as to be located in the vicinity of the road surface. The power transmission coil 71 generates an alternating current magnetic field based on an alternating current supplied from a power source. The power transmission coil 71 is entirely configured in a ring shape and is disposed such that an axial direction of the ring is approximately perpendicular to the road surface so as to generate the alternating current magnetic field toward an upper part of the road surface. However, the power transmission coil 71 is schematized in the drawing. The power transmission coil 71 as the power transmission device 7 is, for example, wound around a core such as a ferrite core and configured entirely in a ring shape, but is not limited to this and may be any coil capable of generating an alternating current magnetic field, such as a coil spring or an air-core coil.

A power receiving coil (secondary coil) 51, as the power receiving device 5, is disposed opposite the power transmission coil 71, in a state in which the tire-wheel assembly 1 is positioned above the power transmission device 7, such that an axial direction of a ring is approximately perpendicular to the road surface. Thereby, when the tire 2 is located on the road surface above the power transmission coil 71, an electromotive force is generated in the power receiving coil 51 by electromagnetic induction based on the alternating current magnetic field generated by the power transmission coil 71, and a current flows through the power receiving coil 51. The power receiving coil 51 as the power receiving device 5 is, for example, wound around a core such as a ferrite core and entirely configured in a ring shape, but is not limited to this and may be any coil capable of generating an electromotive force based on an alternating current magnetic field, such as a coil spring or an air-core coil.

In the illustrated example, the tire-wheel assembly 1 may be provided with relay devices 6 and an internal power receiving device 8 inside in the wheel radial direction, and may also contain a power conversion circuit 9 and an in-wheel motor 10, as a drive mechanism (hereinafter referred to as an "internal mechanism") for rotating the tire. Relay coils 61 as the relay devices 6 are connected to the power receiving coils 51 of the power receiving devices 5 by metal wiring 62, and electric power generated by the power receiving device 5 is fed to the relay coil 61 via the metal wiring 62. The rim portion 31 has through holes 31a for passing the metal wiring 62.

The electric power supplied to the relay device 6 is supplied to the power conversion circuit 9 via the internal power receiving device 8, and is converted, for example, into a direct current. The electric power converted by the power conversion circuit 9 may be supplied to the in-wheel motor 10. The in-wheel motor 10 is an electric motor for rotating the tire-wheel assembly 1. The tire-wheel assembly 1 may be further provided with a power storage device (not illustrated) to store the electric power converted by the power conversion circuit 9.

The power receiving devices 5 may be fixed to the above-described internal mechanism. In this case, the electric power supplied to the power receiving device 5 can be supplied to the power conversion circuit 9 without passing through the relay device 6 and the internal power receiving device 8.

The electric power received by the power receiving device 5 from the power transmission device 7 may be transmitted to the power conversion circuit 9 using a slip ring. As the slip ring, a conventionally known slip ring having metal rings and brushes may be used.

The power receiving devices 5 may be configured not to be rotated with rotation of the tire 2 or the wheel 3.

In FIG. 1, the tire-wheel assembly 1 includes a pair of the power receiving devices 5, but any number of the power receiving devices 5 may be provided. In a case in which the power receiving devices 5 are mounted at positions, such as wheel 3, that rotate simultaneously with rotation of the tire, a plurality of the power receiving devices 5 may be installed continuously or intermittently in a circumferential direction of the wheel.

An example in which the power receiving device 5 (power receiving coil 51) receives electric power wirelessly from the power transmission device 7 (power transmission coil 71) by the electromagnetic induction method is described, but is not limited to this. For example, the power receiving device 5 may receive electric power wirelessly from the power transmission device 7 by any method such as an electric field coupling method. In this case, the power receiving device 5 and the power transmission device 7 may be electrodes or the like.

The above configuration allows electric power to be supplied wirelessly from outside the tread portion 20 of the tire 2 in the tire radial direction.

As described above, when electric power is wirelessly supplied to the power receiving device 5, which is disposed inside the tread portion 20 of the tire 2 in the tire radial direction, from outside the tread portion 20 of the tire 2 in the tire radial direction, at least the tread portion 20 of the tire 2 is interposed between the power transmission device 7 and the power receiving device 5. Therefore, the inventors intensively studied the effects of each component of the tire-wheel assembly on power receiving efficiency.

As a result, it was ascertained that power receiving efficiency may vary depending on the type of a tread rubber, although the reason is not necessarily clear, and this led to the invention. This tendency is particularly noticeable in a case in which electric power is supplied from the power transmission device 7 at a high frequency of, for example, 1 MHz or higher.

With reference to FIG. 2, each component of the tire 2 in the present embodiment will be described below in detail.

In the tire-wheel assembly 1, the tread portion 20 of the tire 2 contains low-loss tread rubber 25a whose loss tangent tan$\delta$ at 60°C is 0.25 or less. In the present embodiment, the entire tread rubber 25 is formed of the low-loss tread rubber 25a.

In this specification, the loss tangent tan$\delta$ refers to the ratio (E"/E') between a value of a dynamic loss modulus E" and a value of a dynamic storage modulus E' obtained under the conditions of a temperature of 60°C, a frequency of 52 Hz, an initial strain of 2%, and a dynamic strain of 1% on a test piece of vulcanized rubber having a thickness of 2 mm, a width of 5 mm, and a length of 20 mm using a dynamic tensile viscoelasticity measurement machine.

According to the above configuration, power receiving efficiency can be improved in wireless power supply from outside the tread portion of the tire in the radial direction. This is particularly effective in the case of supplying electric power at a high frequency. In addition, by setting the loss tangent tan$\delta$ at 60°C to 0.25 or less, heat generation of the rubber is also suppressed.

Also, in the tire-wheel assembly 1, the tire 2 has a ratio Ts/Tb between a gauge Ts (FIG. 2) of the sidewall portion 21 at a tire maximum width portion and a bead width Tb (the width of the bead portion 11 in the tire width direction, FIG. 2) at a center position of the bead core 22A in the tire radial direction of 15% or more and 60% or less. Thereby, it is possible to suitably achieve both high power supply efficiency and low fuel consumption.

By setting the ratio Ts/Tb in the above range, the rigidity of the tire maximum width portion, where bending deformation is large under a tire load, can be moderately reduced to reduce a longitudinal spring coefficient and improve ride comfort.

That is, if the above-described ratio Ts/Tb exceeds 60%, the gauge of the sidewall portion 21 at the tire maximum width portion becomes larger, and the rigidity of the sidewall portion 21 becomes higher, which may result in a higher longitudinal spring coefficient. On the other hand, if the above-described ratio Ts/Tb is less than 15%, a lateral spring coefficient may be too low and handling stability may not be secured.

In each of the above-described examples, the tire 2 preferably has a gauge Ts (FIG. 2) of the sidewall portion 21 at the tire maximum width portion of 1.5 mm or more. Thereby, it is possible to suitably achieve both high power supply efficiency and low fuel consumption.

By setting the gauge Ts to 1.5 mm or more, the rigidity of the tire maximum width portion can be maintained at an appropriate level to suppress reduction in the lateral spring coefficient and to further ensure handling stability.

The low-loss tread rubber 25a is preferably disposed at least at a tire width directional position corresponding to a tire width directional position at which the power receiving device 5 is disposed. Here, "disposed at a tire width directional position corresponding to a tire width directional position at which the power receiving device 5 is disposed" means that the low-loss tread rubber 25a is present in at least part of a tire width directional area at which the power receiving device 5 is disposed, and includes any of a case in which the entire area at which the power receiving device 5 is disposed corresponds to part of the low-loss tread rubber 25a, a case in which part of the area at which the power receiving device 5 is disposed corresponds to an entire area of the low-loss tread rubber 25a, a case in which part of the area at which the power receiving device 5 is disposed corresponds to part of the low-loss tread rubber 25a, and a case in which the entire area at which the power receiving device 5 is disposed corresponds to the entire area of the low-loss tread rubber 25a. However, from the viewpoint of power receiving efficiency, it is preferable that the entire area at which the power receiving device 5 is disposed correspond to the low-loss tread rubber 25a.

According to the above configuration, electric power can be supplied from the power transmission device 7 to the power receiving device 5 through the low-loss tread rubber 25a having high power receiving efficiency, and power receiving efficiency can be further improved in wireless power supply from outside the tread portion 20 of the tire 2 in the radial direction. This is particularly effective in a case in which electric power is supplied at a high frequency. Furthermore, heat generation of the rubber can be efficiently suppressed.

The low-loss tread rubber 25a preferably has a loss tangent $\tan\delta$ of 0.01 to 0.25 at 60°C, and the low-loss tread rubber 25a more preferably has a loss tangent $\tan\delta$ of 0.05 to 0.15 at 60°C. The tire's grip with the road surface can be improved, handling stability can be maintained, and power receiving efficiency can be further improved. In particular, in the case of supplying electric power at a high frequency, power receiving efficiency can be effectively improved. Furthermore, heat generation of the rubber can be effectively suppressed.

From the viewpoint of maximizing power receiving efficiency and suppressing uneven wear of the tire, the entire tread rubber 25 is preferably formed of the low-loss tread rubber 25a, but part of the tread rubber 25 may be formed of a material other than the low-loss tread rubber 25a. That is, part of the tread rubber 25 in the tire width direction may contain a rubber other than the low-loss tread rubber 25a, and part of the tread rubber 25 in the tire radial direction may contain a rubber other than the low-loss tread rubber 25a. For example, a rubber having a higher loss tangent $\tan\delta$ at 60°C than that of the low-loss tread rubber 25a may be disposed on the side of a tread end TE with respect to the low-loss tread rubber 25a disposed at a tire width directional position corresponding to a tire width directional position at which the power receiving device 5 is disposed, in order to improve braking performance on a wet road surface, while maintaining power receiving efficiency.

The above-described low-loss tread rubber 25a having a loss tangent $\tan\delta$ of 0.25 or less at 60°C can be obtained, for example, as follows.

The low-loss tread rubber 25a may be formed by kneading and vulcanizing a rubber composition containing, in addition to a conventionally known rubber component, an optionally conventionally known filler, anti-aging agent, vulcanizing agent, vulcanization accelerator, process oil, anti-scorch agent, zinc sublimation, stearic acid, and the like, according to a conventional method.

There are no particular limitations on conditions for kneading, and a rotor rotation speed, ram pressure, kneading temperature, and kneading time may be adjusted as appropriate according to a compounding formula, a volume input to a kneading apparatus, and the like, using a Banbury mixer, roll, internal mixer, or the like.

As conditions for vulcanizing the rubber composition, a vulcanization temperature may be, for example, 100 to 190°C. A vulcanization time may be, for example, 5 to 30 minutes.

The rubber component of the low-loss tread rubber 25a includes, for example, a modified or unmodified synthetic rubber such as styrene-butadiene copolymer rubber (SBR), butadiene rubber (BR), polyisoprene rubber (IR), isobutylene isoprene rubber (IIR), butyl halide rubber, styrene-isoprene copolymer rubber (SIR), or chloroprene rubber (CR), or natural rubber (NR).

A method for denaturing a conjugated diene polymer such as SBR or BR is not particularly limited and a conventional known method may be used, such as the method described in International Publication No. 2008/050845 (a method in which a denaturant is reacted with an active end of a conjugated diene polymer and a condensation reaction involving the denaturant is carried out in the presence of a titanium-based condensation accelerator).

As the conjugated diene polymer, for example, a copolymer of 1,3-butadiene and styrene is suitable.

As the denaturant, for example, N,N-bis(trimethylsilyl)aminopropylmethyldimethoxysilane, N,N-bis(trimethylsilyl)aminopropylmethyldiethoxysilane, or 1-trimethylsilyl-2-ethoxy-2-methyl-1-aza-2-silacyclopentane is suitable.

As the titanium-based condensation accelerator, for example, tetrakis(2-ethyl-1,3-hexanediolato)titanium, tetrakis(2-ethylhexoxy)titanium, or titanium di-n-butoxide(bis-2,4-pentanedioate) is suitable.

One or more of the above-described rubber components may be used alone or in combination.

The filler includes, for example, conventionally known carbon black, silica, calcium carbonate, talc, clay, and the like. One or more of the above fillers may be used alone or in combination.

The rubber composition forming the low-loss tread rubber 25a includes at least the rubber component and the filler, and it is preferable that the filler be contained in the rubber composition in 50 to 100 mass parts per 100 mass parts of the rubber component. This has the advantage of excellent wear resistance and processability. From the viewpoint of wear resistance and processability, it is more preferable that 55 to 85 mass parts of the filler be contained in 100 mass parts of the rubber component, and it is even more preferable that 75 to 85 mass parts of the filler be contained in 100 mass parts of the rubber component. Also, it is more preferable that 50 to 90 mass parts of the filler be contained in 100 mass parts of diene-based polymer (diene-based rubber).

In the low-loss tread rubber 25a, it is preferable that the filler include silica, and that the silica be contained in 25 to 100 mass parts per 100 mass parts of the rubber component. This has the advantage of excellent wet performance. From the viewpoint of the wet performance, it is more preferable that the silica be contained in 50 to 75 mass parts relative to 100 mass parts of the rubber component, and it is even more preferable that the silica be contained in 60 to 75 mass parts.

In a case in which silica is used as the filler, the silica may be treated with a silane coupling agent.

In order to make the loss tangent tan$\delta$ of the low-loss tread rubber 25a to be 0.01 to 0.25 as described above, for example, the formulation may be changed as appropriate in the range of 0 to 20 phr of NR, 20 to 70 phr of modified S-SBR in 100 phr of diene-based polymer, and in the range of 30 to 80 phr of silica in 50 to 80 phr of the filler.

A method for changing the loss tangent tan$\delta$ is not limited to the method described above, and another known method may be used, such as changing the amount of the filler or adjusting the ratio of silica to carbon.

A maximum thickness t1 of the low-loss tread rubber 25a in the tire radial direction is 3 to 15 mm.

Here, the maximum thickness t1 in the tire radial direction means a dimension when the tire 2 is mounted on a specified applicable rim, filled with a specified internal pressure, and unloaded. The maximum thickness in the tire radial direction means that the tire has a maximum tire radial thickness in the tire width direction. In a case in which the tread rubber 25 includes a rubber other than the low-loss tread rubber 25a in part in the tire radial direction, the maximum thickness of the tread rubber 25 in the tire radial direction is preferably 3 to 15 mm.

By setting the maximum thickness t1 of the low-loss tread rubber 25a in the tire radial direction to 3 mm or more, the durability of the tire can be maintained. By setting the maximum thickness t1 of the low-loss tread rubber 25a in the tire radial direction to 15 mm or less, power receiving efficiency can be further improved.

In the tire 2, the pair of bead portions 22 each have the bead core 22A and the bead filler 22B. The bead core 22A includes a plurality of bead wires 22c the peripheries of which are covered with rubber. As the bead wires 22c, any of steel cords, organic fiber cords, and resin cords may be used.

In the case of using the resin cords as the bead wires 22c, it is possible to reduce the weight of the tire-wheel assembly.

A resin material used for the resin cords may be a thermoplastic resin such as polyester and nylon, a thermosetting resin such as a vinyl ester resin and an unsaturated polyester resin, or another synthetic resin. The resin material may further contain fibers such as glass, carbon, graphite, aramid, polyethylene, or ceramic as reinforcing fibers.

As the bead wire described above, a monofilament cord or a cord made of a plurality of filaments twisted together may be used. Various designs may be adopted for the twisting structure, and various cross-sectional structures, twisting pitches, twisting directions, and distances between adjacent filaments may be used. Furthermore, a cord made by twisting filaments of different materials may be used, and the cross-sectional structure is not particularly limited, and various twisting structures such as single twisting, layer twisting, and double twisting may be used.

The bead filler 22B is formed of rubber or the like, and is located outside the bead core 22A in the tire radial direction. In the present embodiment, the thickness of the bead filler 22B decreases toward the outside in the tire radial direction. The tire 2 may be structured without the bead fillers 22B. The bead portions 22 are configured, when the tire 2 is mounted on the rim, to be in contact with the rim inside in the tire radial direction and outside in the tire width direction.

In the tire 2, the carcass 23 may be composed of, for example, two carcass plies stacked and arranged in the tire radial direction at the tire equatorial plane CL. As illustrated partially enlarged in FIG. 2, each carcass ply includes one or more carcass cords 23c and coating rubber 23r that covers the carcass cords 23c. As the carcass cord 23c that constitutes the carcass ply of the carcass 23, a metal cord such as a steel cord, an organic fiber cord such as nylon, rayon, and aramid, or a resin cord such as polyester may be used.

In the case of using the resin cord as the carcass cord 23c, the weight of the tire-wheel assembly can be reduced and power receiving efficiency can be further improved.

As the above-described carcass cord 23c, a monofilament cord or a cord in which a plurality of filaments are twisted together may be used. Various designs of the twisting structure may be adopted, and various cross-sectional structures, twisting pitches, twisting directions, and distances between adjacent filaments may be used. Furthermore, a cord made by twisting filaments of different materials may be used, and the cross-sectional structure is not particularly limited, and various twisting structures such as single twisting, layer twisting, and double twisting may be used.

A belt 24 constituted of one or more, in the example illustrated in the drawing, two layers of belt plies 24a and 24b is provided outside the carcass 23 of the tire 2 in the tire radial direction. As illustrated partially enlarged in FIG. 2, each of the belt plies 24a and 24b includes one or more belt cords 24c and coating rubber 24r that covers the belt cords 24c. As the belt cords 24c, metal cords such as steel cords, organic fiber cords such as nylon, rayon, and aramid, or resin cords such as polyester may be used.

In the case of using the resin cords as the belt cords 24c, the weight of the tire-wheel assembly can be reduced and power receiving efficiency can be further improved.

As the above-described belt cord 24c, a monofilament cord or a cord in which a plurality of filaments are twisted together may be used. Various designs of the twisting structure may be adopted, and various cross-sectional structures, twisting pitches, twisting directions, and distances between adjacent filaments may be used. Furthermore, a cord made by twisting filaments of different materials may be used, and the cross-sectional structure is not particularly limited, and various twisting structures such as single twisting, layer twisting, and double twisting may be used.

In a case in which the tire 2 is provided with side rubber at the sidewall portion 21, as typified by a run-flat tire, the power receiving efficiency can be further enhanced by mixing ferrite powder into the side rubber.

Each component of the wheel 3 in the present embodiment may be configured as follows.

The rim portion 31 of the wheel 3 may be made of a metal material such as aluminum or steel, or a resin material such as polyester.

In the case of using the resin material for the rim portion 31, the weight of the tire-wheel assembly can be reduced, and power receiving efficiency can be increased even when the rim portion is interposed between the power transmission device 7 and the power receiving device 5.

The disk portion 32 of the wheel 3 may be made of a metal material such as aluminum or steel, or a resin material such as polyester.

In the case of using the resin material for the disk portion 32, the weight of the tire-wheel assembly can be reduced.

In the tire-wheel assembly 1 according to the present embodiment, it is preferable that the power receiving device 5 be supplied with electric power by an electromagnetic induction method. According to this configuration, wireless power supply can be performed with high power receiving efficiency.

In the present embodiment, provided that St $(mm^2)$ represents the area of the ground surface, which is a surface that is in contact with the road surface, when the tire 2 is mounted on the rim portion 31, filled with a specified internal pressure, and loaded with a maximum load, and Sc $(mm^2)$ represents a projected area of the power receiving coil 51 onto the road surface when the power receiving coil 51 is positioned such that the projected area is maximized, the ratio Sc/St is preferably 1 or less. In the present embodiment, the ratio Sc/St is 0.5 or more and 0.99 or less. In the present embodiment, a camber angle is set to 0°.

The above camber angle refers to an angle with respect to a direction perpendicular to the ground surface. Note that, "+ (plus)" means a positive camber, and "- (minus)" means a negative camber. As to + (plus) and - (minus) of an angle of an inner or outer circumferential surface of the bottom of the well, + (plus) represents an angle formed when a positive camber is applied to the inner or outer circumferential surface of the bottom of the well, and - (minus) represents an angle formed when a negative camber is applied to the inner or outer circumferential surface, which becomes in parallel with the ground surface when a camber angle is 0°.

With regard to the "parallel" and "angle", if the inner and outer circumferential surfaces of the bottom of the well are not straight in a cross-sectional view of the wheel in the width direction, the "parallel" and "angle" shall be considered by linear approximation using the least squares method in the cross-sectional view.

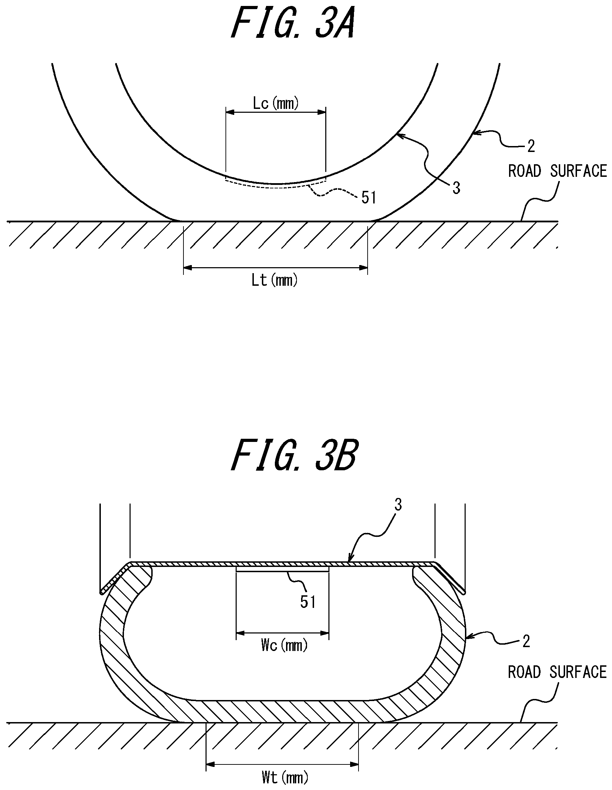

FIG. 3A is a view of the tire viewed from its side, which schematically illustrates about a ground length Lt (mm) and a projected length Lc (mm) of the power receiving coil. FIG. 3B is a cross-sectional view in the tire width direction, which schematically illustrates about a ground width Wt (mm) and a projected width Wc (mm) of the power receiving coil. In FIG. 3A, only one of the four power receiving coils 51 arranged at four positions on the circumference is illustrated. FIG. 3B illustrates a cross-sectional view in the tire width direction through the location of one of the power receiving coils 51. In this example, the power receiving coil 51 has a curvature that corresponds to (but is not necessarily the same as) the curvature of the wheel 3 in the side view illustrated in FIG. 3A. In the side view illustrated in FIG. 3A, an actual periphery length of the power receiving coil 51 is different from a projected length of the power receiving coil 51 when the power receiving coil 51 is projected onto the road surface (the actual periphery length of the power receiving coil 51 is longer than the projected length). On the other hand, in the cross-sectional view illustrated in FIG. 3B, an actual periphery width of the power receiving coil 51 is equal to a projected width of the power receiving coil when the power receiving coil 51 is projected onto the road surface. On the other hand, in the invention, the power receiving coil 51 may be configured to have no curvature in the side view illustrated in FIG. 3A, in which case the actual periphery length (width) of the power receiving coil 51 is equal to the projected length (width). The power receiving coil 51 may also be configured to have a curvature in the cross-sectional view of FIG. 3B, in which case the actual periphery length (width) of the power receiving coil 51 becomes larger than the projected length (width).

In a case in which the power receiving coil 51 is configured to rotate together with the tire 2 and the wheel 3, as in the present embodiment, there is a timing, in one rotation during rolling of the tire, at which the power receiving coil 51 is positioned such that the projected area of the power receiving coil 51 onto the road surface is maximized.

For example, to stop the vehicle on the power transmission device 7 at such a timing, autonomous driving technology may be used, or a sensor may be provided in the tire 2 to detect a rotation state of the tire, and the rotation information detected by the sensor may be notified to a driver by a communication interface or the like to let the driver stop the vehicle.

On the other hand, in a case in which the power receiving coil 51 is configured not to rotate with rotation of the tire 2 or wheel 3, the power receiving coil 51 may be positioned in advance such that the projected area of the power receiving coil 51 onto the road surface is maximized.

Now, as illustrated in FIGS. 3A and 3B, provided that Lt (mm) represents a ground length of the ground surface in the tire circumferential direction and Wt (mm) represents a ground width in the tire width direction, Lc (mm) represents a projected length of the power receiving coil 51 onto the road surface in the tire circumferential direction when the power receiving coil 51 is positioned such that the projected length is maximized, and Wc (mm) represents a projected width of the power receiving coil 51 onto the road surface in the tire width direction when the power receiving coil 51 is positioned such that the projected width is maximized,

$$Lc \leq Lt, \text{ and } Wc \leq Wt$$

preferably hold true.

The effects of the above configuration will be described below.

When a power receiving device receives a wireless supply of electric power from a power transmission device installed on a road or the like, an obstacle may enter a space between the power receiving device and the power transmission device, causing eddy currents to be generated around the obstacle, which may reduce power receiving efficiency.

On the other hand, of magnetic fluxes emitted from the power transmission coil 71, magnetic fluxes that pass through the ground surface of the tire are not obstructed by such an obstacle, so it is efficient to improve power receiving efficiency of the magnetic fluxes that pass through the ground surface of the tire.

According to the above-described configuration in which the ratio Sc/St is 1 or less, the entire surface of the power receiving coil 51 having the above projected area Sc, which is less than or equal to the ground area St, can receive the magnetic fluxes passing through the ground surface. As a result, power receiving efficiency of the power receiving coil 51 can be maximized, thus achieving high power receiving efficiency.

In particular, in the present embodiment, since the above ratio Sc/St is 0.99 or less, high power receiving efficiency can be achieved more reliably. Also, in the present embodiment, since the ratio Sc/St is 0.5 or more, the projected area of the power receiving coil 51 can be secured and the amount of electric power received by the power receiving coil 51 can be increased.

In addition, according to the above configuration wherein Lc ≤ Lt and Wc ≤ Wt, power receiving efficiency of the power receiving coil 51 can be maximized in both the tire circumferential direction and the tire width direction, so that high power receiving efficiency can be achieved more reliably in automatic power supply using the electromagnetic induction method.

In particular, in the present embodiment, the power receiving coil 51 is attached to the inner circumferential surface or the outer circumferential surface (inner circumferential surface in the present embodiment) of the rim portion 31 (bottom of the well 35 in the present embodiment). This allows the power receiving coil 51 to be stably attached.

As described above, high power receiving efficiency can be achieved in automatic power supply using the electromagnetic induction method.

It is more preferable that the above ratio Sc/St be 0.5 or more and 0.99 or less. This is because, as described above, high power receiving efficiency can be achieved more reliably, while increasing the amount of power received by the power receiving coil. For the same reason, it is particularly preferable that the above ratio Sc/St be 0.6 or more and 0.9 or less.

In the tire-wheel assembly 1 according to the present embodiment, the rim portion has the well, and the power receiving coil is mounted on the inner or outer circumferential surface of the bottom of the well. When a state in which the tire is mounted on the rim portion, filled with a specified internal pressure, applied with a camber angle of -3 to 3° and with a maximum load is referred to as a camber-applied load state, it is preferable that the inner or outer circumferential surface of the bottom of the well on a side to which the power receiving coil is mounted in the camber-applied load state be in parallel with or inclined at an angle of -3 to 3° with respect to the ground surface, which is a surface that is in contact with the road surface in the camber-applied load state.

In a case in which the power receiving coil is attached to the inner or outer circumferential surface of the bottom of the well, the projected area of the power receiving coil onto the ground surface can be increased with respect to the actual area of the power receiving coil. Therefore power receiving efficiency can be further increased when the tire is provided with a camber angle in the above range, while suppressing an increase in the weight of the power receiving coil.

In the tire-wheel assembly 1 of the present embodiment, according to the above configuration of

$$\mathrm{Lc} \leq \mathrm{Lt, \ and \ Wc} \leq \mathrm{Wt,}$$

it is possible to achieve high power receiving efficiency more reliably in automatic power supply using the electromagnetic induction method, by maximizing power receiving efficiency of the power receiving coil in both the tire circumferential direction and the tire width direction.

In the tire-wheel assembly 1 of the present embodiment, it is preferable to satisfy:

$$\mathrm{Lc/Lt} \geq 0.5, \ and \ \mathrm{Wc/Wt} \geq 0.5$$

This is because, by setting the ratio Lc/Lt to 0.5 or more, the length of the power receiving coil when viewed in the tire circumferential direction is secured to be long, and by setting the ratio Wc/Wt to 0.5 or more, the width of the power receiving coil when viewed in the tire width direction is secured to be wide, thereby increasing the amount of electric power supplied to the power receiving coil.

In the tire-wheel assembly 1 of the present embodiment, when T ($mm^2$) represents the actual area of the power receiving coil (the area enclosed by the outer periphery of the power receiving coil),
it is preferable that the ratio Sc/T be 0.5 or more.

This is because, by setting the ratio Sc/T in the above range, the amount of electric power received by the power receiving coil, relative to the weight of the power receiving coil, can be increased.

Furthermore, in the tire-wheel assembly 1 of the present embodiment, when a plurality of the power receiving coils are provided, and d (mm) represents a maximum distance among distances (minimum distance) between the adjacent power receiving coils along the circumferential direction of the wheel, and Lt (mm) represents the ground length of the ground surface in the tire circumferential direction, it is preferable to satisfy:

$$\mathrm{d} \leq \mathrm{Lt}$$

This is because this configuration ensures that electric power is always supplied while the tire is rolling (while the tire is positioned on the power transmission coil), thereby improving power receiving efficiency while the tire is rolling.

In a case in which a plurality of the power receiving coils are provided, it is preferable, from the viewpoint of uniformity, that the distances between the adjacent power receiving coils along the circumferential direction of the wheel be equal.

A variation of the tire-wheel assembly 1 according to the present embodiment will be described with reference to FIGS. 3A and 3B.

In the variation of the tire-wheel assembly 1 according to the present embodiment, provided that St ($mm^2$) represents an area of the ground surface, which is a surface that is in contact with the road surface, when the tire 2 is mounted on the rim portion 31, filled with a specified internal pressure, and loaded with a maximum load, and Sc ($mm^2$) represents a projected area of the power receiving coil 51 onto the road surface when the power receiving coil 51 is positioned such that the projected area is maximized, the ratio Sc/St preferably exceeds 1. In the present variation, the ratio Sc/St is 1.1 or more and 2.0 or less. In the present variation, a camber angle is set to 0°.

As illustrated in FIGS. 3A and 3B, provided that Lt (mm) represents a ground length of the ground surface in the tire circumferential direction and Wt (mm) represents a ground width in the tire width direction, Lc (mm) represents a projected length of the power receiving coil 51 onto the road surface in the tire circumferential direction when the power receiving coil 51 is positioned such that the projected length becomes its maximum, and Wc (mm) represents a projected width of the power receiving coil 51 onto the road surface in the tire width direction when the power receiving coil 51 is positioned such that the projected width becomes its maximum,

$$Lc > Lt, \text{ and } Wc > Wt$$

preferably hold true.

The effects of the above configuration will be described below.

When a power receiving device receives a wireless supply of electric power from a power transmission device installed on a road or the like, an obstacle may enter a space between the power receiving device and the power transmission device, causing eddy currents to be generated around the obstacle, which may reduce power receiving efficiency.

On the other hand, of magnetic fluxes emitted from the power transmission coil 71, magnetic fluxes that pass through the ground surface of the tire are not obstructed by such an obstacle, so it is efficient to improve power receiving efficiency of the magnetic fluxes that pass through the ground surface of the tire.

According to the above-described configuration in which the ratio Sc/St exceeds 1, all the magnetic fluxes that pass through the ground surface can be received by the power receiving coil 51. As a result, power receiving efficiency of the power receiving coil 51 can be maximized, thus achieving high power receiving efficiency.

In particular, in the present variation, since the above ratio Sc/St is 1.1 or more, high power receiving efficiency can be achieved more reliably. Also, in the present variation, since the ratio Sc/St is 2.0 or less, it is possible to suppress weight increase due to the power receiving coil.

In the present variation, since Lc > Lt and Wc > Wt hold true, power receiving efficiency of the power receiving coil 51 can be maximized in both the tire circumferential direction and the tire width direction, so that high power receiving efficiency can be achieved more reliably in automatic power supply using the electromagnetic induction method.

In particular, in the present embodiment, the power receiving coil 51 is attached to the inner circumferential surface or the outer circumferential surface (inner circumferential surface in the present embodiment) of the rim portion 31 (bottom of the well 35 in the present embodiment). This allows the power receiving coil 51 to be stably attached.

According to the above configuration, high power receiving efficiency can be achieved in automatic power supply using the electromagnetic induction method.

It is more preferable that the above ratio Sc/St be 1.1 or more and 2.0 or less. This is because, as described above, high power receiving efficiency can be achieved more reliably, while suppressing weight increase due to the power receiving coil. For the same reason, it is particularly preferable that the above ratio St/Sc be 1.2 or more and 1.9 or less.

In the tire-wheel assembly according to the invention, even in the present variation, the rim portion has the well, and the power receiving coil is mounted on the inner or outer circumferential surface of the bottom of the well. When a state in which the tire is mounted on the rim portion, filled with a specified internal pressure, applied with a camber angle of -3 to 3° and with a maximum load is referred to as a camber-applied load state, it is preferable that the inner or outer circumferential surface of the bottom of the well on a side to which the power receiving coil is mounted in the camber-applied load state be in parallel with or inclined at an angle of -3 to 3° with respect to the ground surface, which is a surface that is in contact with the road surface in the camber-applied load state.

In a case in which the power receiving coil is attached to the inner or outer circumferential surface of the bottom of the well, the projected area of the power receiving coil onto the ground surface can be increased with respect to the actual area of the power receiving coil. Therefore power receiving efficiency can be further increased when the tire is provided with a camber angle in the above range, while suppressing an increase in the weight of the power receiving coil.

In the present variation, it is preferable to satisfy:

$$Lc > Lt, \text{ and } Wc > Wt$$

This is because high power receiving efficiency can be achieved more reliably in automatic power supply using the electromagnetic induction method, by maximizing power receiving efficiency of the power receiving coil in both the tire circumferential direction and the tire width direction.

In the present variation, when T (mm$^2$) represents the actual area of the power receiving coil (the area enclosed by the outer periphery of the power receiving coil), it is preferable that the ratio Sc/T be 0.5 or more.

This is because, by setting the ratio Sc/T in the above range, the amount of electric power received by the power receiving coil, relative to the weight of the power receiving coil, can be increased.

For the same reason, it is more preferable that the ratio Sc/T be 0.7 or more.

[Tire]

A tire of the present invention is the tire 2 in the above-described tire-wheel assembly 1, the configuration of which is as described above.

In the present embodiment, the tire-wheel assembly 1 and the tire 2 are described as being provided for an automobile, but is not limited to this. The tire-wheel assembly 1 is provided for, in addition to the automobile such as a passenger car, a truck, a bus, and a motorcycle, any vehicle that drives wheels and tires by a power source such as a motor, including an agricultural vehicle such as a tractor, a construction vehicle such as a dump truck, a power-assisted bicycle, and an electric wheelchair.

For example, the tire according to the invention is described as being filled with air, but is not limited to this. For example, the tire may be filled with a gas such as nitrogen. Also, for example, the tire may be filled with any fluid, including a liquid, a gel-like substance, or a powder or granular substance, not limited to gas.

For example, the tire of the invention may be a non-pneumatic tire. Also in this case, the power receiving coil is disposed at a position that can be opposite the power transmitting coil.

In the invention, the tire is preferably a tire in which the ground width (the width in the tire width direction between both ends of the ground surface in the tire width direction) is 120 mm or more.

Also, in the invention, the tire preferably has a ground width of 250 mm or less.

In each of the above examples, in a case in which the cross-sectional width SW of the tire 2 is less than 165 (mm), the ratio SW/OD between the cross-sectional width SW and the outer diameter OD of the tire 2 is 0.26 or less, and in a case in which the cross-sectional width SW of the tire 2 is 165 (mm) or more, the cross-sectional width SW (mm) and the outer diameter OD (mm) of the tire 2 preferably satisfy the following relational expression.

$$OD \ (\text{mm}) \geq 2.135 \times SW \ (\text{mm}) + 282.3 \ (\text{mm})$$

(Hereinafter referred to as "relational expression (1)")

By satisfying the above-described ratio SW/OD or the relational expression (1), the cross-sectional width SW of the tire 2 becomes relatively small in relation to the outer diameter OD of the tire 2, thereby reducing air resistance, and the narrower cross-sectional width secures more space in the vehicle, and in particular, secures space for installation of drive components inside of the vehicle in the vicinity of the tire mounted on the vehicle.

In addition, by satisfying the above ratio SW/OD or the relational expression (1), the outer diameter OD of the tire 2 becomes relatively large with respect to the cross-sectional width SW of the tire 2, thereby reducing rolling resistance. The wheel axle becomes higher due to the larger diameter of the tire 2, thereby expanding space under a floor. Thereby it is possible to secure space for a trunk or the like of the vehicle and space for installation of drive components.

As described above, by satisfying the above ratio SW/OD or the relational expression (1), low fuel consumption can be achieved for the electrical energy supplied, and large vehicle space can also be secured.

It is also preferable that the cross-sectional width SW (mm) and the outer diameter OD (mm) of the tire 2 satisfy the following relational expression.

$$OD \ (\text{mm}) \geq -0.0187 \times SW \ (\text{mm})^2 + 9.15 \times SW \ (\text{mm}) - 380 \ (\text{mm})$$

(Hereinafter referred to as "relational expression (2)")

By satisfying the above-described relational expression (2), the cross-sectional width SW of the tire becomes relatively small in relation to the outer diameter OD of the tire 2, thereby reducing air resistance, and the narrower cross-sectional width secures more space in the vehicle, and in particular, secures space for installation of drive components inside of the vehicle in the vicinity of the tire mounted on the vehicle.

In addition, by satisfying the above relational expression (2), the outer diameter OD of the tire becomes relatively large with respect to the cross-sectional width SW of the tire 2, thereby reducing rolling resistance. The wheel axle becomes higher due to the larger diameter of the tire 2, thereby expanding space under a floor. Thereby it is possible to secure space for a trunk or the like of the vehicle and space for installation of drive components.

As described above, by satisfying the above relational expression (2), low fuel consumption can be achieved for the electrical energy supplied, and large vehicle space can also be secured.

In each of the above examples, it is preferred that the tire 2 satisfy the above ratio SW/OD and/or relational expression (2), or the tire 2 satisfy the above relational expression (1) and/or relational expression (2).

In each of the above-described examples, it is preferable that, when the internal pressure is 250 kPa or more, the tire 2 satisfy the above ratio SW/OD and/or relational expression (2), or satisfy the above relational expression (1) and/or relational expression (2).

In each of the above-described examples, the tire 2 is preferably used with an internal pressure of 250 kPa or more. In this case, it is particularly suitable that, when the internal pressure is 250 kPa or more, the tire 2 satisfies the above ratio SW/OD and/or relational expression (2), or satisfies the above relational expression (1) and/or relational expression (2). As a result, both the tire rolling resistance and the tire weight can be reduced. Therefore, it is possible to suitably achieve both high power supply efficiency and low fuel consumption.

In each of the above-described examples, the tire 2 is suitable in which the cross-sectional area S1 of the bead filler 22B in the tire width direction is one or more and eight or less times the cross-sectional area S2 of the bead core 22A in the tire width direction. This suitably achieves both high power supply efficiency and low fuel consumption.

In the case of a sandwiched bead core structure that holds the carcass from the inside and outside in the tire width direction, S2 represents the total volume of the bead core in the inside and outside of the carcass in the width direction.

By setting the cross-sectional area S1 of the bead filler 22B in the tire width direction in the above range, the volume of the bead filler, which is a highly rigid member, can be reduced to reduce the longitudinal spring coefficient of the tire and improve ride comfort. In addition, the bead filler can be made lighter to reduce the weight of the tire, and therefore the rolling resistance of the tire can be further reduced.

In particular, in a narrow width and large diameter tire that satisfies the above relational expression (1) or relational expression (2), the tensional rigidity of a belt is high and the tensional rigidity of tire side portions is low in comparison with the belt, so that the effect of reducing the longitudinal spring coefficient, by setting the cross-sectional area S1 of the bead filler in the predetermined range as described above, is very high.

If the cross-sectional area S1 of the bead filler 22B in the tire width direction is more than eight times the cross-sectional area S2 of the bead core 22A in the tire width direction, the volume of the bead filler, which is a highly rigid member, becomes large, and the longitudinal spring coefficient of the tire is not sufficiently reduced, which may result in a decrease in ride comfort.

On the other hand, if the cross-sectional area S1 of the bead filler 22B in the tire width direction is less than one time the cross-sectional area S2 of the bead core 22A in the tire width direction, the rigidity of the bead portion may be significantly reduced and the lateral spring coefficient may be too reduced to ensure handling stability.

In each of the above examples, when BFW (see FIG. 2) represents the width of the bead filler 22B in the tire width direction at a center position in the tire radial direction, and BDW (see FIG. 2) represents the maximum width of the bead core 22A in the tire width direction, it is preferable that the tire 2 satisfy:

$$0.1 \leq \mathrm{BFW/BDW} \leq 0.6$$

This suitably achieves both high power supply efficiency and low fuel consumption.

By setting the ratio BFW/BDW to 0.6 or less, the volume of the bead filler is reduced while maintaining the height of the bead filler, thereby reducing the longitudinal spring coefficient while ensuring rigidity in a tire rotational direction. Thereby it is possible to improve ride comfort and reduce the weight of the tire.

On the other hand, by setting the ratio BFW/BDW to 0.1 or more, the rigidity of the bead portion can be secured, the lateral spring coefficient can be maintained, and the handling stability can be further secured.

In each of the above examples, when BFH (see FIG. 2) represents the height of the bead filler 22B in the tire radial direction, and SH (see FIG. 2) represents the tire section height (cross-section height) of the tire, it is preferable that the tire 2 satisfy:

$$0.1 \leq \mathrm{BFH/SH} \leq 0.5$$

This suitably achieves both high power supply efficiency and low fuel consumption.

By setting the above ratio BFH/SH to 0.5 or less, the radial height of the bead filler, which is a highly rigid member, can be reduced to effectively reduce the longitudinal spring coefficient of the tire and improve ride comfort.

On the other hand, by setting the above ratio BFH/SH to 0.1 or more, the rigidity of the bead portion can be secured, the lateral spring coefficient can be maintained, and the handling stability can be further secured.

Here, the tire cross-sectional height SH shall mean 1/2 of the difference between the outer diameter of the tire and the rim diameter in a state in which the tire is mounted on the rim, filled with an internal pressure specified for each vehicle in which the tire is mounted, and under no load.

The height BFH (see FIG. 2) of the bead filler 22B in the tire radial direction is preferably 45 mm or less. This suitably achieves both high power supply efficiency and low fuel consumption.

In each of the above-described examples, the tire 2 preferably has a diameter Tbc of the bead core 22A (the maximum width of the bead core in the tire width direction in this example, see FIG. 2. in the case of a structure in which the bead core is divided into a plurality of small bead cores by the carcass, Tbc is the distance between an innermost end and an outermost end of all the small bead cores in the width direction.) of 3 mm or more and 16 mm or less. This suitably achieves both high power supply efficiency and low fuel consumption.

By setting the diameter Tbc to 3 mm or more, weight reduction can be achieved, while bending rigidity and torsional rigidity on the rim flange can be secured. On the other hand, by setting the diameter Tbc to 16 mm or less, handling stability can be secured, while weight increase can be suppressed.

In each of the above-described examples, the tire 2 preferably has a ground contact area of 8000 mm$^2$ or more, when the tire 2 is loaded with a maximum load specified for each vehicle in which the tire is mounted. This enables both reduction in the rolling resistance of the tire and reduction in the weight of the tire, and thus achieves both high power supply efficiency and low fuel consumption. In addition, the tire axial force can be secured to improve the stability and safety of the vehicle.

In each of the above-described examples, the tire 2 preferably has a Young's modulus of the belt cord 24c of 40000 MPa or more. This allows the carcass structure and the belt rigidity to be appropriate and to ensure the strength of the tire that can be used even with high internal pressure. In addition, it is possible to suitably achieve both high power supply efficiency and low fuel consumption.

In each of the above-described examples, the tire 2 preferably has a thickness of an inner liner 26 of 0.6 mm or more. This can suppress air leakage in a high internal pressure state. In addition, it is possible to suitably achieve both high power supply efficiency and low fuel consumption.

In each of the above-described examples, the tire 2 is suitable in which the ratio Ts/Tc between the gauge Ts (see FIG. 2) of the sidewall portion 21 at the tire maximum width portion and the diameter Tc (see FIG. 2) of the carcass cord is 4 or more and 12 or less. This suitably achieves both high power supply efficiency and low fuel consumption.

By setting the ratio Ts/Tc in the above range, the rigidity at the tire maximum width portion, where bending deformation is large under a tire load, can be moderately reduced to reduce the longitudinal spring coefficient and improve ride comfort.

In other words, if the above ratio Ts/Tc is more than 12, the gauge of the sidewall portion 4 at the tire maximum width portion becomes large and the rigidity of this portion becomes high, which may result in a high longitudinal spring coefficient. On the other hand, if the above ratio Ts/Tc is less than 4, the lateral spring coefficient may be too low and the handling stability may not be secured.

In each of the above-described examples, when Ta (see FIG. 2) represents a distance from the surface of the carcass cord 23c to the outer surface of the tire in the tire width direction at the tire maximum width portion, the tire 2 preferably has a ratio Ta/Tc between the distance Ta and the diameter Tc (see FIG. 2) of the carcass cord is 2 or more and 8 or less. This suitably achieves both high power supply efficiency and low fuel consumption.

By setting the above ratio Ta/Tc to 8 or less, the gauge of the sidewall portion 21 at the tire maximum width portion can be made small to reduce the rigidity of the sidewall portion 21, thereby reducing the longitudinal spring coefficient and further improving ride comfort. On the other hand, by setting the above ratio Ta/Tc to 2 or more, the lateral spring coefficient can be secured and the handling stability can be secured more.

Note that, "Ta" (see FIG. 2) refers to the distance from the surface of the outermost carcass cord 23c to the outer surface of the tire in the tire width direction at the tire maximum width portion.

That is, in a case in which a carcass folded portion 23b extends to the outside of the tire maximum width portion in the radial direction, Ta represents the distance from the surface of the carcass cord 23c at the portion forming the carcass folded portion 23b to the outer surface of the tire in the tire width direction.

In each of the above-described examples, the tire 2 preferably has a diameter Tc (see FIG. 2) of the carcass cord 23c of 0.2 mm or more and 1.2 mm or less. This suitably achieves both high power supply efficiency and low fuel consumption.

By setting the above diameter Tc to 1.2 mm or less, the gauge Ts of the sidewall portion relative to the diameter Tc of the carcass cord can be reduced to reduce the longitudinal spring coefficient. On the other hand, by setting the above diameter Tc to 0.2 mm or more, the gauge Ts of the sidewall portion relative to the diameter Tc of the carcass cord can be ensured, and the lateral spring coefficient is increased to ensure the handling stability.

Industrial applicability

The tire-wheel assembly and tire according to the invention can be suitably used in automobiles, motorcycles, walking aids, wheelchairs, and any vehicles that can be moved by the wheels and the tires.

REFERENCE SIGNS LIST

| | |
|---|---|
| 1 | tire-wheel assembly |
| 2 | tire |
| 3 | wheel |
| 31 | rim portion |
| 31a | through hole |
| 32 | disk portion |

| 33 | flange |
| 34 | bead seat |
| 35 | well |
| 36 | hump |
| 4 | tread surface |
| 5 | power receiving device |
| 51 | power receiving coil |
| 6 | relay device |
| 61 | relay coil |
| 62 | metal wiring |
| 7 | power transmission device |
| 71 | power transmission coil |
| 8 | internal power receiving device |
| 9 | power conversion circuit |
| 10 | in-wheel motor |
| 20 | tread portion |
| 21 | sidewall portion |
| 22 | bead portion |
| 22A | bead core |
| 22B | bead filler |
| 22c | bead wire |
| 23 | carcass |
| 23b | carcass folded portion |
| 23c | carcass cord |
| 23r | coating rubber |
| 24 | belt |
| 24a, 24b | belt layer |
| 24c | belt cord |
| 24r | coating rubber |
| 25 | tread rubber |
| 25a | low-loss tread rubber |
| 26 | inner liner |

**Claims**

1. A tire-wheel assembly (1) comprising a tire (2) having a tread portion (20), a sidewall portion (21), and a bead portion (22), and a wheel (3) on which the tire is mounted,
the tire has a bead core (22A) embedded in the bead portion, and a ratio Ts/Tb, between a gauge (Ts) of the sidewall portion at a tire maximum width portion, and a bead width (Tb) at a center position of the bead core in the tire radial direction, is 15% or more and 60% or less, **characterised in that**:

   the tire-wheel assembly is configured such that electric power is wirelessly supplied from outside the tread portion in a tire radial direction to a power receiving device (5) disposed inside the tread portion of the tire in the tire radial direction, wherein
   the tread portion contains low-loss tread rubber having a loss tangent $\tan\delta$ of 0.25 or less at 60°C, the loss tangent $\tan\delta$ refers to the ratio (E''/E') between a value of a dynamic loss modulus E'' and a value of a dynamic storage modulus E' obtained under the conditions of a temperature of 60°C, a frequency of 52 Hz, an initial strain of 2%, and a dynamic strain of 1% on a test piece of vulcanized rubber having a thickness of 2 mm, a width of 5 mm, and a length of 20 mm using a dynamic tensile viscoelasticity measurement machine, and wherein
   a maximum thickness (t1) of the low-loss tread rubber in the tire radial direction is 3 to 15 mm.

2. The tire-wheel assembly (1) according to claim 1, wherein the low-loss tread rubber is disposed at least at a tire width directional position corresponding to a tire width directional position in which the power receiving device (5) is disposed.

3. The tire-wheel assembly (1) according to claim 1 or 2, wherein the low-loss tread rubber has a loss tangent $\tan\delta$ of 0.01 or more at 60°C.

4. The tire-wheel assembly (1) according to any one of claims 1 to 3, wherein the power receiving device (5) is supplied with the electric power by an electromagnetic induction method.

5. Use of a tire (2) in the tire-wheel assembly (1) according to any one of claims 1 to 4,

   wherein the tire comprises a tread portion (20), wherein the tread portion contains low-loss tread rubber having a loss tangent tan$\delta$ of 0.25 or less at 60°C, the loss tangent tan$\delta$ refers to the ratio (E"/E') between a value of a dynamic loss modulus E" and a value of a dynamic storage modulus E' obtained under the conditions of a temperature of 60°C, a frequency of 52 Hz, an initial strain of 2%, and a dynamic strain of 1% on a test piece of vulcanized rubber having a thickness of 2 mm, a width of 5 mm, and a length of 20 mm using a dynamic tensile viscoelasticity measurement machine, and
   the tire has a bead core (22A) embedded in a bead portion (22), and a ratio Ts/Tb between a gauge (Ts) of a sidewall portion at a tire maximum width portion and a bead width (Tb) at a center position of the bead core in a tire radial direction is 15% or more and 60% or less, and
   a maximum thickness (t1) of the low-loss tread rubber in the tire radial direction is 3 to 15 mm.

**Patentansprüche**

1. Reifen-Rad-Baugruppe (1), die einen Reifen (2), der einen Laufflächenabschnitt (20), einen Seitenwandabschnitt (21) und einen Wulstabschnitt (22) aufweist, und ein Rad (3), auf dem der Reifen montiert ist, umfasst,
   wobei der Reifen einen Wulstkern (22A), der in dem Wulstabschnitt eingebettet ist, aufweist und ein Verhältnis Ts/Tb, zwischen einer Stärke (Ts) des Seitenwandabschnitts in einem Abschnitt maximaler Reifenbreite und einer Wulstbreite (Tb) an einer Mittenposition des Wulstkerns in der Reifenradialrichtung, 15 % oder mehr und 60 % oder weniger beträgt, **dadurch gekennzeichnet, dass**:

   die Reifen-Rad-Baugruppe derart konfiguriert ist, dass Elektroenergie drahtlos von außerhalb des Laufflächenabschnitts in einer Reifenradialrichtung einer Energie aufnehmenden Einrichtung (5) zugeführt wird, die innerhalb des Laufflächenabschnitts des Reifens in der Reifenradialrichtung angeordnet ist, wobei
   der Laufflächenabschnitt verlustarmen Laufflächengummi enthält, der einen Verlustfaktor tan$\delta$ von 0,25 oder weniger bei 60 °C aufweist, wobei sich der Verlustfaktor tan$\delta$ auf das Verhältnis (E"/E') zwischen einem Wert eines dynamischen Verlustmoduls E" und einem Wert eines dynamischen Speichermoduls E' bezieht, erhalten unter den Bedingungen einer Temperatur von 60 °C, einer Frequenz von 52 Hz, einer anfänglichen Dehnung von 2 % und einer dynamischen Dehnung von 1 % an einem Prüfstück aus vulkanisiertem Gummi, das eine Dicke von 2 mm, eine Breite von 5 mm und eine Länge von 20 mm aufweist, unter Verwendung einer Messmaschine für dynamische Zug-Viskoelastizität, und wobei
   eine maximale Dicke (t1) des verlustarmen Laufflächengummis in der Reifenradialrichtung 3 bis 15 mm beträgt.

2. Reifen-Rad-Baugruppe (1) nach Anspruch 1, wobei der verlustarme Laufflächengummi mindestens bei einer Position in Reifenbreitenrichtung angeordnet ist, die einer Position in Reifenbreitenrichtung, in der die Energie aufnehmende Einrichtung (5) angeordnet ist, entspricht.

3. Reifen-Rad-Baugruppe (1) nach Anspruch 1 oder 2, wobei der verlustarme Laufflächengummi einen Verlustfaktor tan$\delta$ von 0,01 oder mehr bei 60 °C aufweist.

4. Reifen-Rad-Baugruppe (1) nach einem der Ansprüche 1 bis 3, wobei die Energie aufnehmende Einrichtung (5) durch ein elektromagnetisches Induktionsverfahren mit der Elektroenergie versorgt wird.

5. Verwendung eines Reifens (2) in der Reifen-Rad-Baugruppe (1) nach einem der Ansprüche 1 bis 4,

   wobei der Reifen einen Laufflächenabschnitt (20) umfasst, wobei der Laufflächenabschnitt verlustarmen Laufflächengummi enthält, der einen Verlustfaktor tan$\delta$ von 0,25 oder weniger bei 60 °C aufweist, wobei sich der Verlustfaktor tan$\delta$ auf das Verhältnis (E"/E') zwischen einem Wert eines dynamischen Verlustmoduls E" und einem Wert eines dynamischen Speichermoduls E' bezieht, erhalten unter den Bedingungen einer Temperatur von 60 °C, einer Frequenz von 52 Hz, einer anfänglichen Dehnung von 2 % und einer dynamischen Dehnung von 1 % an einem Prüfstück aus vulkanisiertem Gummi, das eine Dicke von 2 mm, eine Breite von 5 mm und eine Länge von 20 mm aufweist, unter Verwendung einer Messmaschine für dynamische Zug-Viskoelastizität, und der Reifen einen Wulstkern (22A), der in einem Wulstabschnitt (22) eingebettet ist, aufweist, und ein Verhältnis Ts/Tb zwischen einer Stärke (Ts) eines Seitenwandabschnitts in einem Abschnitt maximaler Reifenbreite und einer Wulstbreite (Tb) an einer Mittenposition des Wulstkerns in einer Reifenradialrichtung 15 % oder mehr und 60 % oder weniger beträgt, und

eine maximale Dicke (t1) des verlustarmen Laufflächengummis in der Reifenradialrichtung 3 bis 15 mm beträgt.

## Revendications

1. Ensemble pneumatique-roue (1), comprenant un pneumatique (2) comportant une partie de bande de roulement (20), une partie de flanc (21) et une partie de talon (22), et une roue (3) sur laquelle le pneumatique est monté ; le pneumatique comporte une tringle (22A) noyée dans la partie de talon, et un rapport Ts/Tb entre une grosseur (Ts) de la partie de flanc au niveau d'une partie à largeur maximale du pneumatique, et une largeur de talon (Tb) au niveau d'une partie centrale de la tringle, dans la direction radiale du pneumatique, est de 15 % ou plus et de 60 % ou moins, **caractérisé en ce que** :

   l'ensemble pneumatique-roue est configuré de sorte qu'une énergie électrique est fournie sans fil depuis l'extérieur de la partie de bande de roulement, dans une direction radiale du pneumatique, à un dispositif de réception d'énergie (5) disposé à l'intérieur de la partie de bande de roulement du pneumatique, dans la direction radiale du pneumatique, dans lequel

   la partie de bande de roulement contient une gomme de bande de roulement à faible perte ayant une tangente de perte tan$\delta$ de 0,25 ou moins à 60 °C, la tangente de perte tan$\delta$ se référant au rapport (E"/E') entre une valeur d'un module de perte dynamique E" et une valeur d'un module de stockage dynamique E' obtenues dans les conditions d'une température de 60 °C, d'une fréquence de 52 Hz, d'une contrainte initiale de 2 % et d'une contrainte dynamique de 1 % sur une pièce de test de caoutchouc vulcanisé ayant une épaisseur de 2 mm, une largeur de 5 mm, et une longueur de 20 mm en utilisant une machine de mesure de viscoélasticité en traction dynamique, et dans lequel

   une épaisseur maximale (t1) de la gomme de bande de roulement à faible perte, dans la direction radiale du pneumatique, est comprise entre 3 et 15 mm.

2. Ensemble pneumatique-roue (1) selon la revendication 1, dans lequel la gomme de bande de roulement à faible perte est disposée au moins au niveau d'une position, dans la direction de la largeur du pneumatique, correspondant à une position, dans la direction de la largeur du pneumatique, dans laquelle est disposé le dispositif de réception d'énergie (5).

3. Ensemble pneumatique-roue (1) selon la revendication 1 ou 2, dans lequel la gomme de bande de roulement à faible perte a une tangente de perte tan$\delta$ de 0,01 ou plus à 60 °C

4. Ensemble pneumatique-roue (1) selon l'une quelconque des revendications 1 à 3, dans lequel le dispositif de réception d'énergie (5) est alimenté en énergie électrique par un procédé d'induction électromagnétique.

5. Utilisation d'un pneumatique (2) dans l'ensemble pneumatique-roue (1) selon l'une quelconque des revendications 1 à 4,

   dans laquelle le pneumatique comprend une partie de bande de roulement (20), dans laquelle la partie de bande de roulement contient une gomme de bande de roulement à faible perte ayant une tangente de perte tan$\delta$ de 0,25 ou moins à 60 °C, la tangente de perte tan$\delta$ se référant au rapport (E"/E') entre une valeur d'un module de perte dynamique E" et une valeur d'un module de stockage dynamique E' obtenues dans les conditions d'une température de 60 °C, d'une fréquence de 52 Hz, d'une contrainte initiale de 2 % et d'une contrainte dynamique de 1 % sur une pièce de test de caoutchouc vulcanisé ayant une épaisseur de 2 mm, une largeur de 5 mm, et une longueur de 20 mm en utilisant une machine de mesure de viscoélasticité en traction dynamique, et le pneumatique comporte une tringle (22A) noyée dans une partie de talon (22), et un rapport Ts/Tb entre une grosseur (Ts) d'une partie de flanc au niveau d'une position à largeur maximale du pneumatique et une largeur de talon (Tb) au niveau d'une position centrale de la tringle, dans une direction radiale du pneumatique, est de 15 % ou plus et de 60 % ou moins ; et

   une épaisseur maximale (t1) de la gomme de bande de roulement à faible perte, dans la direction radiale du pneumatique, est comprise entre 3 et 15 mm.

# FIG. 1

# FIG. 2

# FIG. 3A

# FIG. 3B

**EP 4 005 825 B1**

**REFERENCES CITED IN THE DESCRIPTION**

**Patent documents cited in the description**

- JP H08126106 B
- JP 2009106136 B
- JP 2016074408 A
- JP 2018167831 A
- JP 2000255229 A
- WO 2008050845 A